# EUROPEAN PATENT APPLICATION

(11) **EP 1 937 013 A1**
(43) Date of publication of application: **25.06.2008**
(21) Application number: 06026454.6
(22) Date of filing: 20.12.2006
(51) Int. Cl.: H04Q 7/38

(54) **Method and device for routing, in a wireless cellular telecommunication network, an incoming call down to a mobile terminal**

(71) Applicant: Mitsubishi Electric Information Technology Centre Europe B.V., 1119 NS Schiphol Rijk (NL); MITSUBISHI DENKI KABUSHIKI KAISHA, Chiyoda-ku, Tokyo 100-8310 (JP)
(72) Inventor: Voyer, Nicolas, CS 10806 35708 Rennes Cedex 7 (FR); Okubo, Akira, CS 10806 35708 Rennes Cedex 7 (FR)
(74) Representative: Maillet, Alain

(57) **Abstract**

The present invention concerns a method for routing, in a wireless cellular telecommunication network, an incoming call down to a mobile terminal, the wireless cellular telecommunication network comprising network devices, a first network device memorizing at least one identifier of at least one second network device. The first network device :
- receives a first message representative of an incoming call,
- reads at least one identifier of one second network device which manages the area in which the mobile terminal is supposed to be located,
- transfers a second message representative of the incoming call to the second network device,
- memorises information representative of the transferred message,
- receives, from a third network device, a third message representative of the presence of the mobile terminal in another area,
- transfers to the third network device, a fourth message indicating that the message representative of the incoming call has been transferred.

## Description

The present invention relates to a method and a device for routing, in a wireless cellular telecommunication network, an incoming call down to a mobile terminal.

In wireless cellular telecommunication networks, mobile terminals which are in idle mode are handled by a network device. In Long Term Evolution (LTE) of universal mobile terrestrial system (UMTS) network, the network device is named a Mobility Management Entity (MME). In General Packet Radio Service network, the network device is named a Serving GPRS Support Node. In mobile IP network, the network device is named a Foreign Agent and in GSM network, the network device is named a Visitor Location Register.

The network devices are in charge of keeping track of the mobile terminal location in the wireless cellular telecommunication network, so as to be able to route paging notifications to the base station which controls cells in which the mobile terminal is expected to be located. Such paging notification can occur at various occasions, but mainly at the time that an incoming call has to be routed from the network down to the mobile terminal. Then the base station can send over the radio a paging message, that the mobile terminal can listen to. Once the mobile terminal has received the paging message, it can wake up and trigger signalling so as to accept the call.

When a mobile terminal enters in a cell which does not belong to the tracking area it belongs to, the mobile terminal sends a Tracking Area Update message to the base station controlling the cell the mobile terminal enters. The message comprises the identifier of the network device which deals with the mobile terminal context, so that the base station can route the message to the corresponding network device. The network device is thus kept informed of which tracking area contains the mobile terminal, and is capable to route paging indications for such mobile terminal to each base station that controls one cell belonging to that tracking area.

During a tracking area update procedure, if the initial network device receives an incoming call for a mobile terminal, the network device sends paging notifications in the cells of the tracking area in which the destination mobile terminal is supposed to be located. However, at such time, the mobile terminal may no longer be in that tracking area, as it has triggered a tracking area update procedure. Consequently, the mobile terminal can no longer listen to the paging message in those cells, and can not be informed of a paging notification. Thus, the mobile terminal would miss the call, resulting in a poor grade of service. In case the transition between tracking areas become frequent, as example when the mobile terminal moves back and forth between adjacent tracking areas, as well as in case the trigger of the tracking area update procedure is postponed to the acquisition of reliable radio measurement at the edge of radio cells, this problem might lead to significant losses in responding to incoming calls.

In practice, one network device can track the mobility of mobile terminal within a sub-set of the entire wireless cellular telecommunication network. When a mobile terminal moves from one sub-set to another subset, the mobile terminal detects a change of tracking area and sends a tracking area update message to the base station controlling the cell the mobile terminal is entering. Under such circumstance, the base station is not connected to the previous network device and has to select another target network device, to which the tracking area update message should be routed. Then the target network device has to communicate with the initial network device so as to get the context of that mobile terminal, and acknowledge the change of tracking area to the mobile terminal. This context transfer procedure is called relocation procedure.

Relocation procedure is thus designed so that mobile terminal can get a continuity of coverage when moving from one area covered by a first network device to an area covered by another network device. The area managed by one network device is called a MME pool area, as it can be covered by morc than one MME. A MME pool area is typically composed of multiple tracking areas, and one tracking area doesn't overlap two MME pool areas.

As the duration of the tracking area update procedure increases if it involves a relocation procedure, the duration during which the mobile terminal can not be reached is also increased. In case the transition between pool areas become frequent, and in case the mobile terminal moves backs and forth between adjacent tracking areas of different pool areas, this problem lead to even more significant losses in responding to incoming calls.

The aim of the invention is therefore to propose a method and a device which make it possible to route anytime in a wireless cellular telecommunication network an incoming call to a mobile terminal.

To that end, the present invention concerns a method for routing, in a wireless cellular telecommunication network, an incoming call down to a mobile terminal, the wireless cellular telecommunication network comprising network devices, a first network device memorizing at least one identifier of at least one second network device associated to the mobile terminal and managing an area in which the mobile terminal is supposed to be located, characterised in that the first network device executes the steps of :
- receiving a first message representative of an incoming call for the mobile terminal,
- reading at least one identifier of one second network device associated to the mobile terminal,
- transferring a second message representative of the incoming call to the at least one second network device using the at least one read identifier,
- memorising information representative of the transferred message,
- receiving, from a third network device, a third message representative of the presence of the mobile terminal in another area,
- transferring to the third network device, a fourth message comprising at least one information indicating that the message representative of the incoming call has been transferred to at least one second network device if information representative of the transferred message is memorized.

The present invention concerns also a device for routing, in a wireless cellular telecommunication network, an incoming call down to a mobile terminal, the wireless cellular telecommunication network comprising network devices, the device for routing being included in a first network device memorizing at least one identifier of at least one second network device associated to the mobile terminal and managing an area in which the mobile terminal is supposed to be located, the mobile terminal being supposed to be located in one of the areas, characterised in that the device for routing comprises :
- means for receiving a first message representative of an incoming call for the mobile terminal,
- means for reading at least one identifier of one second network device which manages the area in which the mobile terminal is supposed to be located,
- means for transferring a second message representative of the incoming call to at least one second network device using the at least one read identifier,
- means for memorising information representative of the transferred message,
- means for receiving, from a third network device, a third message representative of the presence of the mobile terminal in another area,
- means for transferring to the third network device, a fourth message comprising at least one information indicating that the message representative of the incoming call has been transferred to at least one second network device if information representative of the transferred message is memorized.

Thus, if the network device receives a message representative of an incoming call for a mobile terminal and that the mobile terminal is no longer in the area managed by the second network device, the third network device which manages the area in which the mobile terminal is located is informed about the incoming call and can then inform the mobile terminal about that call. Thus, the mobile terminal doesn't miss the call, resulting in an increase of the quality of service of the wireless cellular telecommunication network.

Such improvement of the quality of service is very effective when the update procedure of the location of the mobile terminal takes more than one second.

According to a particular feature, a timestamp is associated to the information representative of the transferred message and in that the first network device:
- checks if the timestamp is lower than a time value,
- deletes the memorized information representative of the transfer of second message if the timestamp is lower than a time value.

Thus, the management of the memory is made efficiently.

Furthermore, the first network device doesn't need to care about the fact that the mobile terminal responds affirmatively to the incoming call. If a message representative of the presence of the mobile terminal in another area is received within the time value, the first network device informs the third network device which manages the other area that a message representative of the incoming call has been transferred to the second network device which manages the area in which the mobile terminal is supposed to be located. The process of incoming call routing is then simplified.

According to a variant of the first mode of realisation of the present invention, the first network device is a mobility management entity which manages at least one tracking area composed of plural areas, the second network devices are base stations which respectively manage an area of the tracking area, and the first network device transfers the second message representative of the incoming call to each base station.

According to a particular feature of the variant of the first mode of realisation of the present invention, the first network device manages at least two tracking areas, the first network device transfers the second message representative of the incoming call to each base station which manages a cell of the tracking area the mobile terminal is supposed to be located in and the third network device is a base station which manages an area of a tracking area in which the mobile terminal is not supposed to be located.

Thus, a mobile terminal can respond to an incoming call even if it changes of tracking area in the case it failed to receive the call notification properly prior to the change of tracking area.

Furthermore, the routing of an incoming call is assumed by the first network device without disturbing other network devices of the wireless cellular telecommunication network.

Furthermore, as the fourth message is sent only to the base station which manages an area of the tracking area in which the mobile terminal is not supposed to be located and not to each base station which manages an area of the tracking area in which the mobile terminal is not supposed to be located, the signalling is minimised, and the fourth message can be routed down to the mobile terminal efficiently.

According to a particular feature of the variant of the first mode of realisation of the present invention, the fourth message comprising at least one information indicating that the message representative of the incoming call has been transferred to at least one second network device is transferred to each base station which manages an area of the tracking area in which the mobile terminal is not supposed to be located.

Thus, a mobile terminal can respond to an incoming call even if it is continuously changing of area.

According to a particular feature of the variant of the first mode of realisation of the present invention, the first network device:
- receives, from a base station which manages an area of one tracking area managed by the first network device, a fifth message informing that another mobile terminal is located in the area managed by the base station which transferred the fifth message,
- checks if the identifier comprised in the fifth message is the identifier of the first network device,
- transfers a sixth message representative of the presence of the mobile terminal in the area managed by the first network device if the identifier comprised in the fifth message is not the identifier of the first network device,
- receives a seventh message in response to the sixth message representative of the presence of the mobile terminal in the area managed by the first network device,
- checks, in the seventh message received in response, if information representative an incoming call has been transferred to the other mobile terminal,
- transfers an eighth message representative of the incoming call to at least the base station which transferred the received message if information representative an incoming call has been transferred to the other mobile terminal.

Thus, even the other mobile terminal is moving through different areas, the mobile terminal doesn't miss the call, resulting in an increase of the quality of service of the wireless cellular telecommunication network.

According to a particular feature of the variant of the first mode of realisation of the present invention, the first network device:
- receives, from a base station which manages an area of one tracking area managed by the first network device, a fifth message informing that another mobile terminal is located in the area managed by the base station which transferred the fifth message, the fifth message comprising at least the identifier of a mobility management entity,
- checks if the identifier is comprised in the fifth message is the identifier of the first network device,
and if the identifier comprised in the fifth message is the identifier of the first network device:
- checks if information representative of a second transferred message is memorized for the other mobile terminal,
- transfers a sixth message representative of the incoming call to at least the base station which transferred the received message if information representative of a second transferred message is memorized for the other mobile terminal.

Thus, if the other mobile terminal moves back and forth between adjacent tracking areas within the MME pool area, the mobile terminal doesn't miss the call, resulting in an increase of the quality of service of the wireless cellular telecommunication network.

According to a particular feature of another variant of the first mode of realisation of the present invention, the first network device transfers the second message representative of the incoming call to each base station which manages a cell of the tracking area the mobile terminal is supposed to be located in, and the third network device is another mobility management entity which manages at least another tracking area composed of plural areas different from the areas of the at least one tracking area managed by the first network device.

Thus, the routing of an incoming call is assumed by the mobility management entities without disturbing other network device of the wireless cellular telecommunication network.

According to a particular feature of the other variant of the first mode of realisation of the present invention, the fourth message comprising at least one information indicating that the message representative of the incoming call has been transferred to at least one second network device further comprises the authentication parameters of the mobile terminal and/or the subscription parameters of the mobile terminal.

Thus, the third network device has all the information which are necessary for the routing of the incoming call and the establishment of the communication with the mobile terminal.

According to a particular feature of the other variant of the first mode of realisation of the present invention, the first network device:
- receives from a base station which manages an area of one tracking area managed by the first network device, a fifth message informing that another mobile terminal is located in the area managed by the base station which transferred the fifth message, the fifth message comprising at least the identifier of a mobility management entity,
- checks if the identifier comprised in the fifth message is the identifier of the first network device,
- transfers a sixth message representative of the presence of the mobile terminal in the area managed by the first network device, if the identifier comprised in the fifth message is not the identifier of the first network device,
- receives a seventh message in response to the sixth message representative of the presence of the mobile terminal in the area managed by the first network device,
- checks, in the seventh message received in response, if information representative an incoming call has been transferred to the other mobile terminal,
- transfers an eighth message representative of the incoming call to at least the base station which transferred the received message if information representative an incoming call has been transferred to the other mobile terminal.

Thus, even the other mobile terminal is moving through different areas, the mobile terminal doesn't miss the call, resulting in an increase of the quality of service of the wireless cellular telecommunication network.

According to a particular feature of the other variant of the first mode of realisation of the present invention, the first network device:
- receives, from a base station which manages an area of one tracking area managed by the first network device, a fifth message informing that another mobile terminal is located in the area managed by the base station which transferred the fifth message, the fifth message comprising at least the identifier of a mobility management entity,
- checks if the identifier comprised in the fifth message is the identifier of the first network device,
and if the identifier comprised in the fifth message is the identifier of the first network device:
- checks if information representative of a second transferred message is memorized for the other mobile terminal,
- transfers a sixth message representative of the incoming call to at least the base station which transferred the received message if information representative of a second transferred message is memorized for the other mobile terminal.

According to a particular feature of the other variant of the first mode of realisation of the present invention, the eighth message representative of the incoming call is transferred to each base station which manages an area of the tracking area comprising the area managed by the base station which transferred the received message.

Thus, a mobile terminal can respond to an incoming call even if it is continuously changing of area.

According to a second mode of realisation of the present invention, the first network device is a mobility anchor, the second network devices are mobility management entities, each mobility management entity manages one pool area which is composed of at least one tracking area composed of plural areas, the first network device transfers the second message representative of the incoming call only to the second network device which manages the pool area in which the mobile terminal is supposed to be located and the third network device is a mobility management entity which manages one pool area, which is composed of at least one tracking area composed of plural areas, in which the mobile terminal is not supposed to be located.

Thus, the memorization of information representative of the message representative of the incoming call transferred to at least one device of the tracking area is made by a single network device for the wireless cellular telecommunication network.

Furthermore, a mobile terminal can respond to a call right after a tracking area update procedure, which involves a relocation procedure even though the mobile terminal could not receive the call notification properly during the realisation of the tracking area update procedure.

According to a particular feature of the second mode of realisation of the present invention, the mobility anchor modifies the timestamp when the message representative of the presence of the mobile terminal in another tracking area is received.

Thus, the mobility anchor can try to retransmit the indication of an incoming call for the mobile terminal in case of an unsuccessful incoming call transmission.

Furthermore, if the mobile terminal moves back and forth between adjacent pool areas, the mobile terminal doesn't miss the call, resulting in an increase of the quality of service of the wireless cellular telecommunication network.

According to a particular feature of the second mode of realisation of the present invention, the mobility anchor identifies the pool area managed by the third network device as the area in which the mobile terminal is supposed to be located.

Thus, the database is updated.

According to a particular feature of the second mode of realisation of the present invention, the third network device :
- receives from a base station which manages an area of one tracking area managed by the third network device, a message informing that the mobile terminal is located in the area managed by the base station which transferred the received message,
- transfers in response to the fourth message representative of the incoming call, a message to the base station which transferred the received message, the message transferred in response to the fourth message indicating that an incoming call is for the mobile terminal.

Thus, as the message transferred in response to the fourth message is sent only to the base station which transferred the received message and not to each base station which manages an area of the tracking area which comprises the base station which transferred the received message, the signalling is minimised and the message indicating that an incoming call is for the mobile terminal can be routed down to the mobile terminal efficiently.

According to still another aspect, the present invention concerns a computer program which can be directly loadable into a programmable device, comprising instructions or portions of code for implementing the steps of the method according to the invention, when said computer program is executed on a programmable device.

Since the features and advantages relating to the computer program are the same as those set out above related to the method and device according to the invention, they will not be repeated here.

According to still another aspect, the present invention concerns a message transferred between two network devices of a wireless cellular telecommunication network, for routing an incoming call down to a mobile terminal, characterised in that the message comprises at least one information indicating that the message representative of the incoming call has been transferred to at least one second network device and authentication parameters of the mobile terminal and/or the subscription parameters of the mobile terminal.

Since the features and advantages relating to the message are the same as those set out above related to the method and device according to the invention, they will not be repeated here.

The characteristics of the invention will emerge more clearly from a reading of the following description of an example embodiment, the said description being produced with reference to the accompanying drawings, among which :
Fig. 1 is a diagram representing the architecture of a wireless cellular telecommunication network in which the present invention is implemented ;
Fig. 2 is a block diagram of a mobility management entity according to the present invention;
Fig. 3 is a block diagram of a mobility anchor according to the present invention;
Fig. 4 represents an algorithm executed by a mobility management entity according to a first mode of realisation of the present invention;
Fig. 5a represents an algorithm executed by mobility anchor according to a second mode of realisation of the present invention;
Fig. 5b represents an algorithm executed by a mobility management entity according to the second mode of realisation of the present invention.

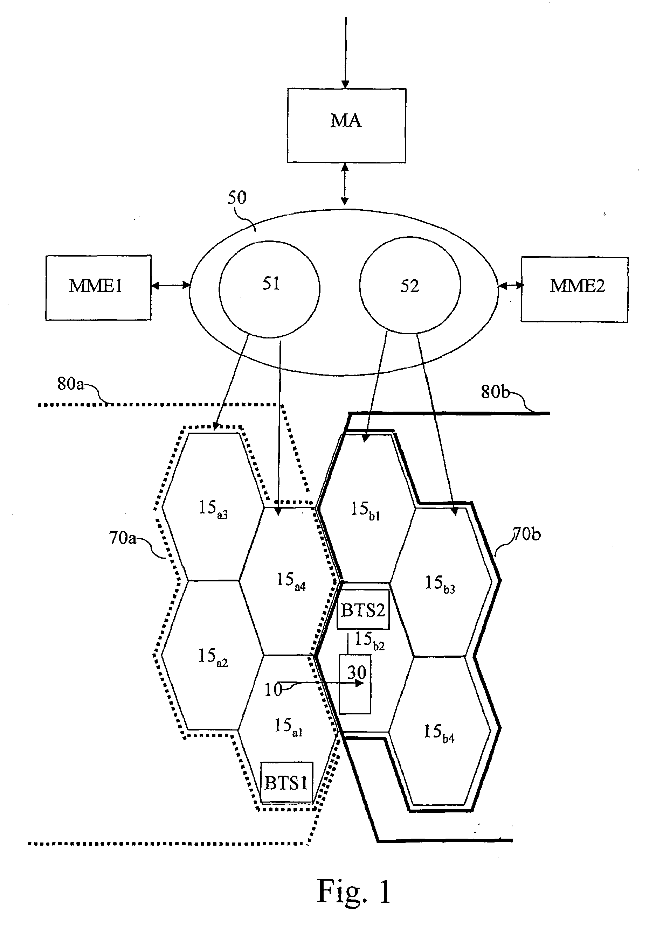

**Fig. 1** is a diagram representing the architecture of a wireless cellular telecommunication network in which the present invention is implemented.

According to the first variant of the first mode of realisation of the present invention, the first network device is a mobility management entity MME, each second network device is a base station BTS and the third network device is another mobility management entity MME.

According to the second variant of the first mode of realisation of the present invention, the first network device is a mobility management entity MME, each second network device is a base station BTS which manages an area comprised in a first tracking area managed by the mobility management entity MME and the third network device is a base station BTS which manages an area comprised in a second tracking area managed by the mobility management entity MME.

According to the second mode of realisation of the present invention, the first network device is a mobility anchor MA, each second network device is a mobility management entity MME which manages at least one tracking area and the third network device is a mobility management entity MME which manages at least one other tracking area.

In the wireless cellular telecommunication of the Fig. 1, a mobility anchor MA is shown.

The mobility anchor MA memorises a table in which each mobile terminal 30 of the wireless cellular telecommunication network is associated to a mobility management entity MME. The mobility anchor MA memorizes then an approximation of the location of each mobile terminal 30 and the profile of each mobile terminal 30.

In the Fig. 1, two mobility management entities MME1 and MME2 are shown for the sake of simplicity. The mobility management entity MME1 manages a pool area 80a, which is composed of at least one tracking area 70a.

The mobility management entity MME2 manages a pool area 80b, which is composed of at least one tracking area 70b.

The mobility management entity MME1 is linked, through a telecommunication network 50, to the mobility anchor MA, to the mobility management entity MME2 and to each base station BTS which manages one of the cells 15ₐ₁ to 15ₐ₄ comprised in the pool area 80a that the mobility management entity MME1 manages.

More precisely, the mobility management entity MME1 is linked, through a sub telecommunication network 51, to cach base station BTS which manages one of the cells 15ₐ₁ to 15ₐ₄ comprised in the pool area 80a that the mobility management entity MME1 manages.

The mobility management entity MME2 is linked, through the telecommunication network 50, to the mobility anchor ME, to the mobility management entity MME2 and to each base station BTS which manages one of the cells 15_{b1} to 15_{b4} comprised in the pool area 80b that the mobility management entity MME2 manages.

More precisely, the mobility management entity MME1 is linked, through a sub telecommunication network 52, to each base station BTS which manages one of the cells 15_{b1} to 15_{b4} comprised in the pool area 80b that the mobility management entity MME2 manages.

A pool area 80 comprises at least one tracking area 70, which comprises plural areas classically named cells 15 in which, when a remote telecommunication device, not shown in the Fig. 1 intends to establish a communication with a mobile terminal 30, the mobility management entity MME which manages the tracking area 70 in which the mobile terminal 30 is located or supposed to be located, transfers to each base station BTS managing a cell 15 comprised in the tracking area 70, a paging message indicating that a remote telecommunication device intends to establish a communication with the mobile terminal 30.

Each base station BTS managing a cell 15 comprised in the tracking area 70 transfers in response a paging message in the cell 15 it manages.

The telecommunication network 50 is, as example and in a non limitative way, a dedicated wired network, part of public network like a public switched network, an IP based network, a wireless network, an Asynchronous Transfer Mode network or a combination of above cited networks.

Only two base station BTS1 and BTS2 are shown in the Fig. 1 for the sake of clarity. The base station BTS 1 manages the cell 15ₐ₁ in which the mobile terminal 30 moves from and the base station BTS2 manages the cell 15_{b2} in which the mobile terminal 30 is entering.

The arrow 10 shows the displacement of the mobile terminal 30 from the cell 15ₐ₁ to the cell 15_{b2}.

Only one mobile terminal 30 is shown in the Fig. 1 for the sake of clarity but in practice, a more important number of mobile terminals 30 are located in the cells 15 of the wireless cellular telecommunication network.

The mobility management entities MME is also named a Serving GPRS Support Node or a Foreign Agent or a Visitor Location Register.

The base station BTS is also named a node or a node B or an enhanced node B or an access point.

The mobile terminals 30 are terminals like mobile phones, personal digital assistants, or personal computers.

According to the first variant of the first mode of realisation of the present invention, each mobility management entity MME comprises :
- means for receiving a first message representative of an incoming call for the mobile terminal from the mobility anchor MA,
- means for reading the identifiers of the base stations BTS which manage the areas or cells 15 of the tracking area 70 in which the mobile terminal 30 is supposed to be located,
- means for transferring a second message representative of the incoming call to the base stations BTS using the read identifiers,
- means for memorising information representative of the transferred message,
- means for receiving, from another mobility management entity MME, a third message representative of the presence of the mobile terminal 30 in a tracking area 70 managed by the other mobility management entity MME,
- means for transferring to the other mobility management entity MME, a fourth message comprising at least one information indicating that the message representative of the incoming call has been transferred to base stations BTS if information representative of the transferred message is memorized.

According to the second variant of the first mode of realisation of the present invention, each mobility management entity MME comprises :
- means for receiving a first message representative of an incoming call for the mobile terminal from the mobility anchor MA,
- means for reading the identifiers of the base station BTS which manage the areas or cells 15 of the tracking area 70 in which the mobile terminal 30 is supposed to be located,
- means for transferring a second message representative of the incoming call to the base stations BTS using the read identifiers,
- means for memorising information representative of the transferred message,
- means for receiving, from another base station BTS which manages an area or cells 15 of another tracking area 70 managed by the mobility management entity MME, a third message representative of the presence of the mobile terminal in the cell managed by the base station which sent the third message,
- means for transferring to the base station which sent the third message, a fourth message comprising at least one information indicating that the message representative of the incoming call has been transferred to base stations if information representative of the transferred message is memorized.

According to the second mode of realisation of the present invention, the mobility anchor MA comprises :
- means for receiving a first message representative of an incoming call for the mobile terminal,
- means for reading the identifier of the mobility management entity MME which manages the pool area 80 in which the mobile terminal 30 is supposed to be located,
- means for transferring a second message representative of the incoming call to the mobility management entity MME which manages the pool area 80 in which the mobile terminal 30 is supposed to be located using the read identifier,
- means for memorising information representative of the transferred message,
- means for receiving, from another mobility management entity MME, a third message representative of the presence of the mobile terminal in another pool area 80 managed by the other mobility management entity MME,
- means for transferring to the other mobility management entity MME, a fourth message comprising at least one information indicating that the message representative of the incoming call has been transferred to a mobility management entity MME if information representative of the transferred message is memorized.

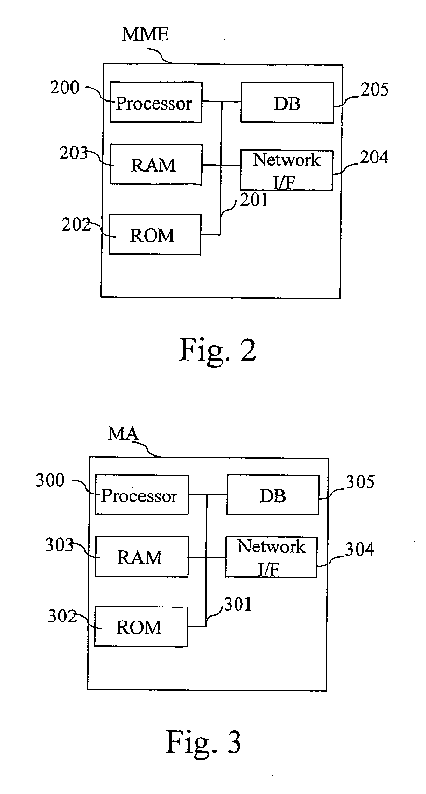

**Fig. 2** is a block diagram of a mobility management entity according to the present invention.

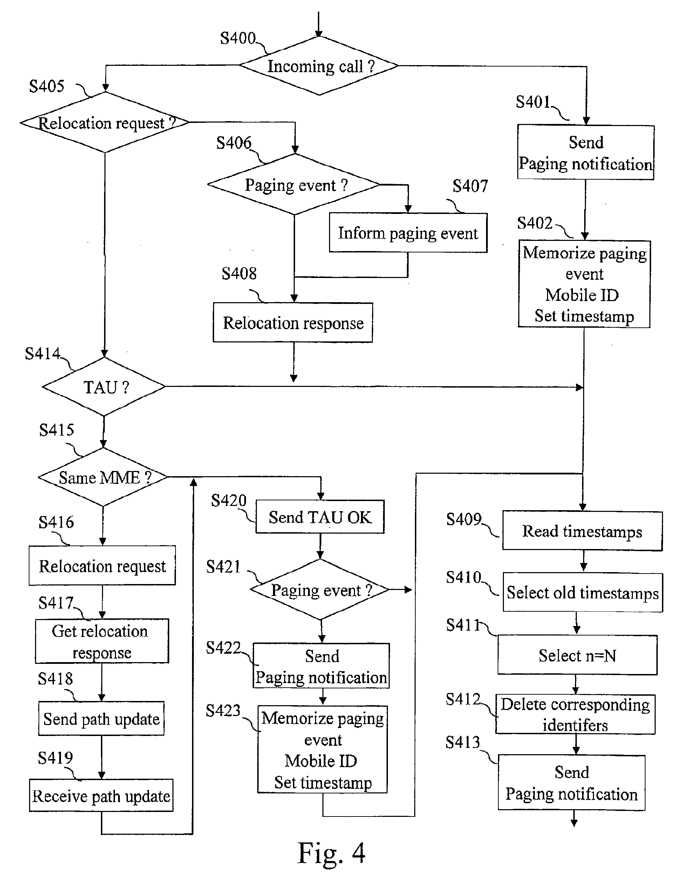

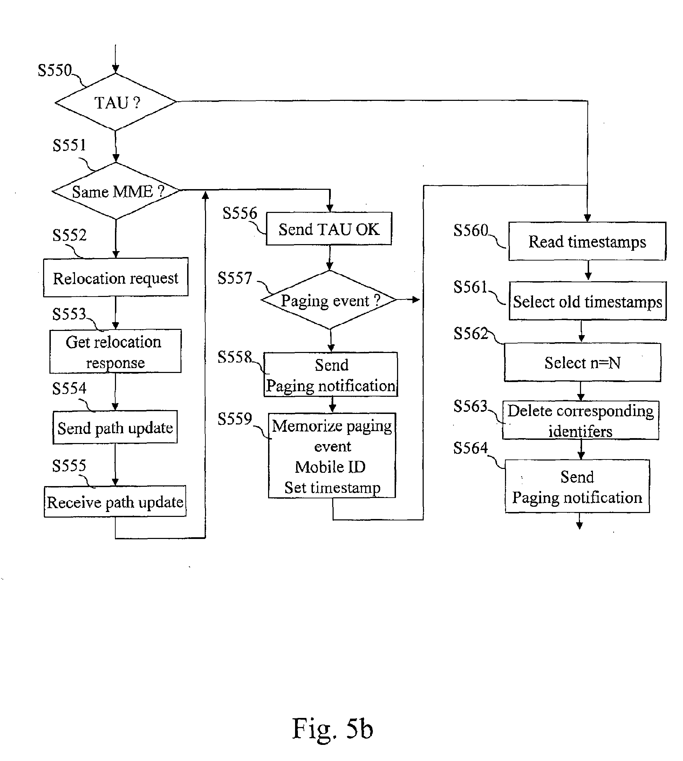

The mobility management entity MME has, for example, an architecture based on components connected together by a bus 201 and a processor 200 controlled by the programs as disclosed in the Fig. 4 or the Fig. 5b.

It has to be noted here that the mobility management entity MME is, in a variant, implemented under the form of one or several dedicated integrated circuits which execute the same operations as the one executed by the processor 200 as disclosed hereinafter.

The bus 201 links the processor 200 to a read only memory ROM 202, a random access memory RAM 203, a database 205 and a network interface 204.

The RAM memory 203 contains registers intended to receive variables, and the instructions of the program related to the algorithm as disclosed in the Fig. 4 or the algorithm of the Fig. 5b.

The read only memory 202 contains the instructions of the programs implementing the algorithm of the Fig. 4 or the algorithm of the Fig. 5b.

The processor 200 controls the operation of the network interface 204.

The mobility management entity MME is connected to the telecommunication network 50 through the network interface 204. As example, the network interface 204 is a DSL (Digital Subscriber Line) modem, or an ISDN (Integrated Services Digital Network) interface, etc.

The database 205 memorises, for cach mobile terminal 30 comprised in the cells 15 of the tracking area 70 of the mobility management entity MME, information related to the mobile terminal 30 like authentication parameters, subscription parameters, the identifier of the tracking area 70 in which the mobile terminal 30 is supposed to be located.

According to the first mode of realisation of the present invention, the database 205 memorizes, for each mobile terminal 30 comprised in the cells 15 of the pool area 80 of the mobility management entity MME, the identifier of the mobile terminal 30, an indication if a paging notification message has been previously transferred to the mobile terminal 30. Preferably, a timestamp is associated to the indication if a paging notification message has been previously transferred to the mobile terminal 30.

**Fig. 3** is a block diagram of a mobility anchor according to the present invention.

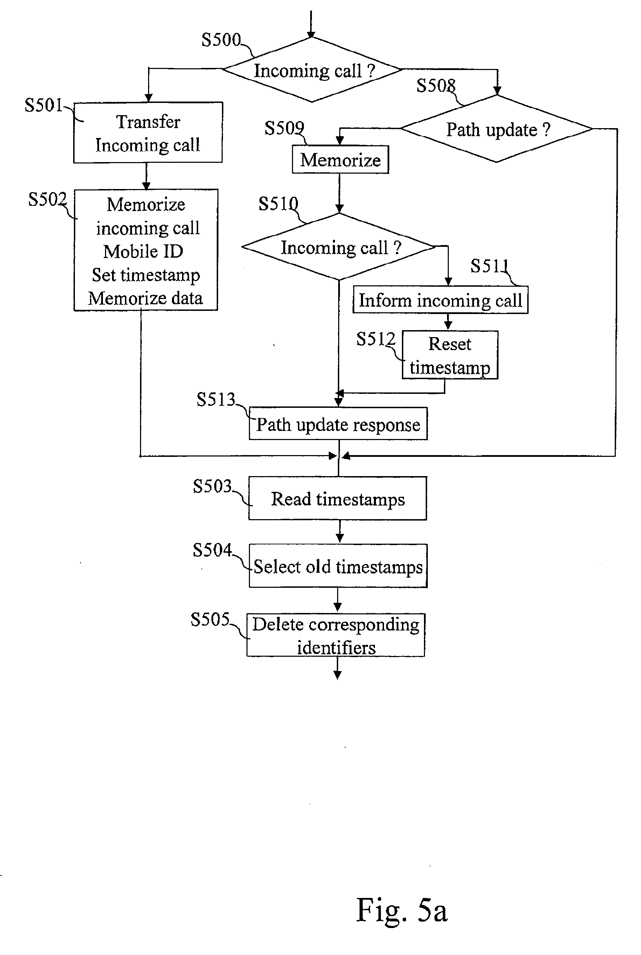

The mobility anchor MA has, for example, an architecture based on components connected together by a bus 301 and a processor 300 controlled by the programs as disclosed in the Fig. 5a.

It has to be noted here that the mobility anchor MA is, in a variant, implemented under the form of one or several dedicated integrated circuits which execute the same operations as the one executed by the processor 300 as disclosed hereinafter.

The bus 301 links the processor 300 to a read only memory ROM 302, a random access memory RAM 303, a database 305 and a network interface 304.

The memory 303 contains registers intended to receive variables, and the instructions of the program related to the algorithm as disclosed in the Fig. 5a.

The read only memory 302 contains the instructions of the programs implementing the algorithm of the Fig. 5a.

The processor 300 controls the operation of the network interface 304.

The mobility anchor MA is connected to the telecommunication network 50 through the network interface 304. As example, the network interface 304 is a DSL (Digital Subscriber Line) modem, or an ISDN (Integrated Services Digital Network) interface, etc.

The database 305 memorises, for each mobile terminal 30 of the wireless cellular telecommunication network, information identifying the mobility management entity MME which manages the tracking area 70 in which the mobile terminal 30 is supposed to be located.

According to the second mode of realisation of the present invention, the database 305 memorizes, for each mobile terminal 30 of the wireless cellular telecommunication network, an information indicating if a paging notification message has been previously transferred to the mobile terminal 30. Preferably, a timestamp is associated to the information indicating if a paging notification message has been previously transferred to the mobile terminal 30.

**Fig.4** represents an algorithm executed by a mobility management entity according to a first mode of realisation of the present invention.

More precisely, the present algorithm is executed by the processor 200 of each mobility management entity MME.

At step S400, the processor 200 checks if an incoming call notification message addressed to a mobile terminal 30 is received from the mobility anchor MA through the network interface 204. If an incoming call notification message is received from the mobility anchor MA, the processor 200 moves to step S401. If no incoming call notification message is received from the mobility anchor MA, the processor 200 moves to step S405.

The incoming call is either a call made by a remote telecommunication device or by a mobile terminal 30 which intends to establish a communication with the mobile terminal 30, or is data to be transferred to the mobile terminal 30.

At step S401, the processor 200 commands the transfer of a paging notification message, through the network interface 204, to each base station BTS which manages a cell 15 which belongs to the tracking area 70 in which the mobile terminal 30, managed by the mobility management entity MME, is supposed to be located.

At next step S402, the processor 200 memorizes in the database 205, the identifier of the mobile terminal 30 to which the incoming call is addressed in combination with an indication that a paging notification message has been previously transferred to the mobile terminal 30 and preferably with a timestamp.

The timestamp value is equal to the clock value of the mobility management entity MME.

Preferably, the processor 200 sets a variable noted n to the value one. The variable n is representative of the number of time a paging notification message has been previously transferred to the mobile terminal 30.

After that, the processor 200 moves to step S409.

At step S405, the processor 200 checks if a relocation request message is received from another mobility management entity MME through the network interface 204. Such relocation request message corresponds to the first variant of the first mode of realisation of the present invention. If a relocation request message is received from another mobility management entity MME, the processor 200 moves to step S406. If no relocation request message is received from another mobility management entity MME, the processor 200 moves to step S414.

The relocation request message comprises at least the identifier of the mobile terminal 30 which moved from a cell 15 belonging to one tracking area 70 managed by the mobility management entity MME to a cell 15 belonging to one tracking area 70 managed by the mobility management entity MME which sent the relocation request message.

At next step S406, the processor 200 checks, in the data base 205, if an information indicating if a paging notification message has been previously transferred to the mobile terminal 30 is associated to the identifier of the mobile terminal 30 comprised in the relocation request message. If an information indicating that a paging notification message has been previously transferred to the mobile terminal 30 is associated to the identifier of the mobile terminal 30, the processor 200 moves to step S407. If no information indicating that a paging notification message has been previously transferred to the mobile terminal 30 is associated to the identifier of the mobile terminal 30, the processor 200 moves to step S408.

At step S407, the processor 200 sets a field of a relocation response message to a predetermined value which indicates that at least one paging notification message has been previously transferred to the mobile terminal 30.

At next step S408, the processor 200 commands the transfer, through the network interface 204, of the relocation response message to the mobility management entity MME which sent the relocation request message. The relocation response message further comprises information related to the mobile terminal 30, like authentication and/or subscription parameter and the information field that was set in step S407.

At next step S409, the processor 200 reads, for each information indicating that a paging notification message has been previously transferred to a mobile terminal 30, the identifier of the mobile terminal 30 in combination with the associated timestamp.

At next step S410, the processor 200 selects, among the read timestamps, old timestamps. An old timestamp is a timestamp which is lower than a time value value. As example, the time value is equal to the clock value of the mobility management entity MME minus two or three seconds. At the same step, the processor 200 selects the identifiers of the mobile terminals 30 corresponding to the old timestamps.

At next step S411, the processor 200 selects the identifiers of the mobile terminals 30 of which the variable n is equal to a constant noted N. N is equal to an integer value which is at least equal to one.

At next step S412, the processor 200 deletes from the database 205, the selected identifiers of the mobile terminals 30, the associated timestamps, the associated information indicating that a paging notification message has been transferred and the associated variable n.

At next step S413, the processor 200 commands the transfer of a paging notification message, for each mobile terminal 30 of which the identifier remains in the database 205 and to which an information indicating that a paging notification message has been transferred, through the network interface 204, to each base station BTS which manages a cell 15 which belongs to the tracking area 70 in which each mobile terminal 30, managed by the mobility management entity MME, is supposed to be located. At the same step, the processor 200 increments each remaining variable n by one.

After that, the processor returns to step S400.

At step S414 the processor 200 checks if a message representative of a tracking Area Update message (TAU) is received from one of the base stations BTS which manages a cell 15 comprised in one tracking area 70 managed by the mobility management entity MME. The tracking area update message is received through the network interface 204.

The tracking area update message is forwarded to the mobility management entity MME by a base station BTS from a mobile terminal 30 which enters into the cell 15 of the base station BTS which does not belong to the tracking area 70 in which the mobile terminal 30 is supposed to be located. The tracking area update message comprises at least the identifier of the mobile terminal 30 and the identifier of the mobility management entity MME which manages the tracking area 70 in which the mobile terminal 30 is supposed to be located or which manages the mobile terminal 30.

If no tracking Area Update message is received, the processor 200 moves to step S409 already described.

If a tracking area update message is received, the processor 200 moves to step S415.

At step S415, the processor 200 checks if it manages the mobility management entity MME identified by the identifier of the mobility management entity MME comprised in the received tracking area update message.

If the processor 200 manages the mobility management entity MME identified by the identifier of the mobility management entity MME comprised in the received tracking area update message, the processor 200 moves to step S420. Such case corresponds to the second variant of the first mode of realisation of the present invention.

Else, if the processor 200 does not manage the mobility management entity MME identified by the identifier of the mobility management entity MME comprised in the received tracking area update message, the processor 200 memorises in the database 205 the identifier of the mobile terminal 30, the identifier of the base station BTS which sent the message received at step S414 and the identifier of the mobility management entity MME comprised in the received tracking area update message.

The processor 200 moves then to step S416.

At next step S416, the processor 200 commands the transfer of a relocation request message to the mobility management entity MME of which the identifier is comprised in the received tracking area update message. The relocation request message further comprises the identifier of the mobilc terminal 30 of which the identifier is comprised in the received tracking area update message.

At next step S417, the processor 200 receives, through the network interface 204, a relocation response message in response to the transferred relocation request message. The relocation response message comprises a field which comprises a predetermined value which indicates if at least one paging notification message has been previously transferred to the mobile terminal 30. The relocation response message comprises also information related to the mobile terminal 30 like authentication and subscription parameters.

At next step S418, the processor 200 commands the transfer, through the network interface 204, of a path update message to the mobility anchor MA. The mobility anchor MA replaces the identifier of former mobility management entity MME which was in charge of the mobile terminal 30 by the identifier of the mobility management entity MME which sends the path update message.

At next step S419, the processor 200 receives, through the network interface 204, a path update response message in response to the path update message previously transferred in combination to data to be transferred to the mobile terminal if there are some.

At next step S420, the processor 200 commands the transfer, through the network interface 204, of a tracking area update confirmation message to the base station BTS which transferred the tracking area update message received at step S414. The base station BTS forwards the tracking area update confirmation message to the mobile terminal 30 which sent the tracking area update message.

At next step S421, the processor 200 checks if at least one paging notification was sent to the mobile terminal 30. At least one paging notification was sent to the mobile terminal if database 205 contains information indicating that a paging notification message has been previously transferred to the mobile terminal 30, or if at step S417, the relocation response message comprised a predetermined value which indicates that at least one paging notification message has been previously transferred to the mobile terminal 30.

If at least one paging notification was sent to the mobile terminal 30, the processor 200 moves to step S422. If no paging notification was sent to the mobile terminal 30, the processor 200 moves to step S409 already described.

At step S422, the processor 200 commands the transfer of a paging notification message, through the network interface 204, to each base station BTS which manages a cell 15 which belongs to the tracking area 70 managed by the mobility management entity MME. In a variant, the paging notification message is transferred only to the base station BTS which transferred the tracking area update message as stored in step S415 or to the base station BTS which transferred the tracking area update message, as stored in step S415 and the base stations BTS located in the vicinity of the base station BTS which transferred the tracking area update message.

In a variant, the messages transferred at steps S420 and S422 are combined in a single message.

At next step S423, the processor 200 memorizes in the database 205, the identifier of the mobile terminal 30 to which the incoming call is addressed in combination with an indication that a paging notification message has been previously transferred to the mobile terminal 30 and preferably with an associated timestamp.

The timestamp value is equal to the clock value of the mobility management entity MME.

The processor 200 moves then to step S409 already described.

**Fig. 5a** represents an algorithm executed by the mobility anchor according to a second mode of realisation of the present invention.

More precisely, the present algorithm is executed by the processor 300 of the mobility anchor MA.

At step S500, the processor 300 checks if a message representative of an incoming call addressed to a mobile terminal 30 is received through the network interface 304. If a message representative of an incoming call is received by the mobility anchor MA, the processor 300 moves to step S501. If no message representative of an incoming call is received, the processor 300 moves to step S508.

The incoming call is either a call made by a remote telecommunication device or by a mobile terminal 30 which intends to establish a communication with the mobile terminal 30, or are data to be transferred to the mobile terminal 30.

At step S501, the processor 300 reads, using the identifier of the mobile terminal 30 to which the incoming call is addressed, the database 305 and gets the identifier of the mobility management entity MME which is supposed to manage the pool area 80 in which the mobile terminal 30 is located. The processor 300 commands the transfer, through the network interface 304, of a message representative of the incoming call to the mobility management entity MME which manages the pool area 80 in which the mobile terminal 30 is located or which manages the mobile terminal 30.

At next step S502, the processor 300 memorizes in the database 305, in combination with the identifier of the mobile terminal 30 to which the incoming call is addressed, an information indicating that an incoming call message has been previously transferred to the mobility management entity MME which manages the mobile terminal 30 or which manages the pool area 80 in which the mobile terminal 30 is located.

Preferably, the processor 300 memorises at the same step a timestamp which is associated to the identifier of the mobile terminal 30.

The processor 300 moves then to step S503.

At step S508, the processor 300 checks if a path update message is received, through the network interface 304, from a mobility management entity MME.

If no path update message is received, the processor 300 returns to step S503. If a path update message is received from a mobility management entity MME, the processor 300 moves to step S509.

A path update message is transferred by a mobility management entity MME in response to a tracking area update message received by a base station BTS from a mobile terminal 30 which enters into the cell 15 of the base station BTS which does not belong to the pool area 80 in which the mobile terminal 30 is supposed to be located. The path update message comprises at least the identifier of the mobile terminal 30 and the identifier of the mobility management entity MME which now manages the mobile terminal 30 or which manages the pool area 80 in which the mobile terminal 30 is now located.

At step S509, the processor 300 replaces the identifier of the former mobility management entity MME which was in charge of the mobile terminal 30 by the identifier of the mobility management entity MME which sent the path update message received at step S508.

At next step S510, the processor 300 checks, in the database 304, if an information indicating if an incoming call notification message has been previously transferred to the mobile terminal 30 is associated to the identifier of the mobile terminal 30 comprised in the path update message. If an incoming call notification message has been previously transferred to the mobile terminal 30, the processor 300 moves to step S511. If no incoming call notification message has been previously transferred to the mobile terminal 30, the processor 300 moves to step S513.

At step S511, the processor 300 sets a field of a path update response message to a predetermined value which indicates that an incoming call notification message has been previously transferred to the mobile terminal 30.

At next step S512, the processor 300 modifies the timestamp which is associated to the identifier of the mobile terminal 30 by setting it to the current time value of the mobility anchor MA.

At next step S513, the processor 300 commands the transfer, through the network interface 304 of the path update response message to the mobility management entity MME which sent the path update message in combination to data to be transferred to the mobile terminal if there are some.

At step S503, the processor 300 reads for each information indicating that a incoming call notification message has been previously transferred to a mobile terminal 30, the identifier of the mobile terminal 30 in combination with the associated timestamp.

At next step S504, the processor 300 selects, among the read timestamps, the old timestamps. An old timestamp is a timestamp which is lower than a time value. As example, the time value is equal to the clock value of the mobility anchor MA minus two or three seconds.

At the same step, the processor 300 selects the identifiers of the mobile terminals 30 corresponding to the old timestamps.

At next step S505, the processor 300 deletes from the database 305, the selected identifiers of the mobile terminals 30, the associated timestamps, the associated information indicating that an incoming call notification message has been transferred.

The processor 300 returns then to step S500.

**Fig. 5b** represents an algorithm executed by a mobility management entity according to the second mode of realisation of the present invention.

More precisely, the present algorithm is executed by the processor 200 of each mobility management entity MME.

At step S550, the processor 200 checks if a message representative of a tracking Area Update message (TAU) is received from one of the base stations BTS which manage a cell 15 comprised in the tracking area 70 managed by the mobility management entity MME. The tracking area update message is received through the network interface 204.

The tracking area update message is forwarded to the mobility management entity MMR by a base station BTS from a mobile terminal 30 which enters into the cell 15 of the base station BTS which does not belongs to the tracking area 70 in which the mobile terminal 30 is supposed to be located. The tracking area update message comprises at least the identifier of the mobile terminal 30 and the identifier of the mobility management entity MME which manages the tracking area 70 in which the mobile terminal 30 is supposed to be located or which manages the mobile terminal 30.

If no tracking area update message is received, the processor 200 moves to step S560,

If a tracking area update message is received, the processor 200 moves to step S551.

At step S551, the processor 200 checks if it manages the mobility management entity MME identified by the identifier of the mobility management entity MME comprised in the received tracking area update message.

If the processor 200 manages the mobility management entity MME identified by the identifier of the mobility management entity MME comprised in the received tracking area update message, the processor 200 moves to step S556.

Else, if the processor 200 does not manage the mobility management entity MME identified by the identifier of the mobility management entity MME comprised in the received tracking area update message, the processor 200 memorises in the database 205 the identifier of the mobile terminal 30, the identifier of the base station BTS which sent the message received at step S550 and the identifier of the mobility management entity MME comprised in the received tracking area update message and then moves to step S552.

At next step S552, the processor 200 commands the transfer of a relocation request message to the mobility management entity MME of which the identifier is comprised in the received tracking area update message. The relocation request message further comprises the identifier of the mobile terminal 30 of which the identifier is comprised in the received tracking area update message.

At next step S553, the processor 200 receives, through the network interface 204, a relocation response message in response to the transferred relocation request message. The relocation response message comprises information related to the mobile terminal 30, like authentication and subscription parameters.

At next step S554, the processor 200 commands the transfer, through the network interface 204, of a path update message to the mobility anchor MA. The mobility anchor MA replaces the identifier of former mobility management entity MME which was in charge of the mobile terminal 30 by the identifier of the mobility management entity MME.

At next step S555, the processor 200 receives, through the network interface 204, of a path update response message in response to the path update message previously transferred in combination to data to be transferred to the mobile terminal if there are some.

The path update response message comprises a field comprising a predetermined value which indicates if an incoming call notification message has been previously transferred to the mobile terminal 30 or not.

At next step S556, the processor 200 commands the transfer, through the network interface 204, of a tracking area update confirmation message to the base station BTS which transferred the tracking area update message received at step S550. The base station BTS forwards the tracking area update confirmation message to the mobile terminal 30 which sent the tracking area update message.

At next step S557, the processor 200 checks if at least one paging notification was sent to the mobile terminal 30. At least one paging notification was sent to the mobile terminal if the database 205 contains information indicating that a paging notification message has been previously transferred to the mobile terminal 30, or if at step S555, the path update response message comprised a predetermined value which indicates that an incoming call notification message has been previously transferred to the mobile terminal 30.

If at least one paging notification was sent to the mobile terminal 30, the processor 200 moves to step S558. If no paging notification was sent to the mobile terminal 30, the processor 200 moves to step S560.

At step S558, the processor 200 commands the transfer of a paging notification message, through the network interface 204, to each base station BTS which manages a cell 15 which belongs to the tracking area 70 managed by the mobility management entity MME. In a variant, the paging notification message is transferred only to the base station BTS which transferred the tracking area update message as stored in step S551 or to the base station BTS which transferred the tracking area update message, as stored in step S551, and the base stations BTS located in the vicinity of to the base station BTS which transferred the tracking area update message.

In a variant, the messages transferred at steps S556 and S558 are combined in a single message.

At next step S559, the processor 200 memorizes in the database 205, the identifier of the mobile terminal 30 to which the incoming call is addressed in combination with an information indicating that a paging notification message has been previously transferred to the mobile terminal 30 and preferably with a timestamp.

At next step S560, the processor 200 reads for each information indicating that a paging notification message has been previously transferred to the mobile terminal 30, the identifier of the mobile terminal 30 in combination with the associated timestamp.

At next step S561, the processor 200 selects among the read timestamps the old timestamps. An old timestamp is a timestamp which is lower than a time value. As example, the time value is equal to the clock value of the mobility management entity MME minus two or three seconds. At the same step, the processor 200 selects the identifiers of the mobile terminals 30 corresponding to the old timestamps.

At next step S562, the processor 200 selects the identifiers of the mobile terminals 30 of which the variable n is equal to a constant noted N. N is equal to an integer value which is at least equal to one.

At next step S563, the processor 200 deletes from the database 205, the selected identifiers of the mobile terminals 30, the associated timestamps, the associated information indicating that a paging notification message has been transferred and the associated variable n.

At next step S564, the processor 200 commands the transfer of a paging notification message, for each mobile terminal 30 of which the identifier remains in the database 205 and to which an information indicating that a paging notification message has been transferred, through the network interface 204, to each base station BTS which manages a cell 15 which belongs to the tracking area 70 in which the mobile terminal 30, managed by the mobility management entity MME, is supposed to be located. At the same step, the processor 200 increments each remaining variable n of one.

After that, the processor returns to step S550.

Naturally, many modifications can be made to the embodiments of the invention described above without departing from the scope of the present invention.

## Claims

1. Method for routing, in a wireless cellular telecommunication network, an incoming call down to a mobile terminal, the wireless cellular telecommunication network comprising network devices, a first network device memorizing at least one identifier of at least one second network device associated to the mobile terminal and managing an area in which the mobile terminal is supposed to be located, **characterised in that** the first network device executes the steps of :
- receiving a first message representative of an incoming call for the mobile terminal,
- reading at least one identifier of one second network device which manages the area in which the mobile terminal is supposed to be located,
- transferring a second message representative of the incoming call to at least one second network device using the at least one read identifier,
- memorising information representative of the transferred message,
- receiving, from a third network device, a third message representative of the presence of the mobile terminal in another area,
- transferring to the third network device, a fourth message comprising at least one information indicating that the message representative of the incoming call has been transferred to at least one second network device if information representative of the transferred message is memorized.

2. Method according to claim 1, **characterised in that** a timestamp is associated to the information representative of the transferred message and **in that** the method comprises further step of:
- checking if the timestamp is lower than a time value,
- deleting the memorized information representative of the transfer of the second message if the timestamp is lower than a time value.

3. Method according to claim 1 or 2, **characterised in that** the first network device is a mobility management entity which manages at least one tracking area composed of plural areas, the second network devices being base stations which respectively manage an area of the tracking area, and **in that** the first network device transfers the second message representative of the incoming call to each base station.

4. Method according to claim 3, **characterised in that** the first network device manages at least two tracking areas, the first network device transfers the second message representative of the incoming call to each base station which manages a cell of the tracking area the mobile terminal is supposed to be located in and **in that** the third network device is a base station which manages an area of a tracking area in which the mobile terminal is not supposed to be located.

5. Method according to claim 4, **characterised in that** the fourth message comprising at least one information indicating that the message representative of the incoming call has been transferred to at least one second network device is transferred to each base station which manages an area of the tracking area in which the mobile terminal is not supposed to be located.

6. Method according to the claim 4 or 5, **characterised in that** the method comprises further step of :
- receiving, from a base station which manages an area of one tracking area managed by the first network device, a fifth message informing that another mobile terminal is located in the area managed by the base station which transferred the fifth message, the fifth message comprising at least the identifier of a mobility management entity,
- checking if the identifier comprised in the fifth message is the identifier of the first network device,
- transferring a sixth message representative of the presence of the mobile terminal in the area managed by the first network device if the identifier comprised in the fifth message is not the identifier of the first network device,
- receiving a seventh message in response to the sixth message representative of the presence of the mobile terminal in the area managed by the first network device,
- checking, in the seventh message received in response, if information representative an incoming call has been transferred to the other mobile terminal,
- transferring an eighth message representative of the incoming call to at least the base station which transferred the received message if information representative an incoming call has been transferred to the other mobile terminal.

7. Method according to the claim 4 or 5, **characterised in that** the method comprises further step of :
- receiving, from a base station which manages an area of one tracking area managed by the first network device, a fifth message informing that another mobile terminal is located in the area managed by the base station which transferred the fifth message, the fifth message comprising at least the identifier of a mobility management entity,
- checking if the identifier is comprised in the fifth message is the identifier of the first network device,
and if the identifier comprised in the fifth message is the identifier of the first network device:
- checking if information representative of a second transferred message is memorized for the other mobile terminal,
- transferring a sixth message representative of the incoming call to at least the base station which transferred the received message if information representative of a second transferred message is memorized for the other mobile terminal.

8. Method according to claim 3, **characterised in that** the first network device transfers the second message representative of the incoming call to each base station which manages a cell of the tracking area the mobile terminal is supposed to be located in, and **in that** the third network device is another mobility management entity which manages at least another tracking area composed of plural areas different from the areas of the at least one tracking area managed by the first network device.

9. Method according to claim 8, **characterised in that** the fourth message comprising at least one information indicating that the message representative of the incoming call has been transferred to at least one second network device further comprises the authentication parameters of the mobile terminal and/or the subscription parameters of the mobile terminal.

10. Method according to claim 8 or 9, **characterised in that** the method comprises further step of :
- receiving from a base station which manages an area of one tracking area managed by the first network device, a fifth message informing that another mobile terminal is located in the area managed by the base station which transferred the fifth message, the fifth message comprising at least the identifier of a mobility management entity,
- checking if the identifier comprised in the fifth message is the identifier of the first network device,
- transferring a sixth message representative of the presence of the mobile terminal in the area managed by the first network device if the identifier is comprised in the fifth message is not the identifier of the first network device,
- receiving a seventh message in response to the sixth message representative of the presence of the mobile terminal in the area managed by the first network device,
- checking, in the seventh message received in response, if information representative an incoming call has been transferred to the other mobile terminal,
- transferring an eighth message representative of the incoming call to at least the base station which transferred the received message if information representative an incoming call has been transferred to the other mobile terminal.

11. Method according to the claim 8 or 9, **characterised in that** the method comprises further step of :
- receiving, from a base station which manages an area of one tracking area managed by the first network device, a fifth message informing that another mobile terminal is located in the area managed by the base station which transferred the fifth message, the fifth message comprising at least the identifier of a mobility management entity,
- checking if the identifier comprised in the fifth message is the identifier of the first network device,
and if the identifier comprised in the fifth message is the identifier of the first network device:
- checking if information representative of a second transferred message is memorized for the other mobile terminal,
- transferring a sixth message representative of the incoming call to at least the base station which transferred the received message if information representative of a second transferred message is memorized for the other mobile terminal.

12. Method according to claim 10 or 11, **characterised in that** the sixth message representative of the incoming call is transferred to each base station which manages an area of the tracking area comprising the area managed by the base station which transferred the received message.

13. Method according to claim 1 or 2, **characterised in that** the first network device is a mobility anchor, the second network devices are mobility management entities, each mobility management entity manages a pool area which is composed of at least one tracking area composed of plural areas, the first network device transfers the second message representative of the incoming call only to the second network device which manages the area in which the mobile terminal being supposed to be located and **in that** the third network device is a mobility management entity which manages a pool area which is composed of at least one tracking area composed of plural areas in which the mobile terminal is not supposed to he located.

14. Method according to claim 13, **characterised in that** the method comprises further step of modifying the timestamp when the third message transferred by the third network device is received.

15. Method according to claim 14, **characterised in that** the method comprises further step of identifying the pool area managed by the third network device as the area in which the mobile terminal is supposed to be located.

16. Method according to any of the claims 13 to 15, **characterised in that** the third network device :
- receives from a base station which manages an area of one tracking area managed by the third network device, a message informing that the mobile terminal is located in the area managed by the base station which transferred the received message,
- transferring in response to the fourth message representative of the incoming call a message to the base station which transferred the received message indicating that an incoming call has been transferred to the mobile terminal.

17. Device for routing, in a wireless cellular telecommunication network, an incoming call down to a mobile terminal, the wireless cellular telecommunication network comprising network devices, the device for routing being included in a first network device memorizing at least one identifier of at least one second network device associated to the mobile terminal and device managing an area in which the mobile terminal is supposed to be located, **characterised in that** the device for routing comprises :
- means for receiving a first message representative of an incoming call for the mobile terminal,
- means for reading at least one identifier of one second network device which manages the area in which the mobile terminal is supposed to be located,
- means for transferring a second message representative of the incoming call to the at least one second network device using the at least one read identifier,
- means for memorising information representative of the transferred message,
- means for receiving, from a third network device, a third message representative of the presence of the mobile terminal in another area,
- means for transferring to the third network device, a fourth message comprising at least one information indicating that the message representative of the incoming call has been transferred to at least one second network device if information representative of the transferred message is memorized.

18. Computer program which can be directly loadable into a programmable device, comprising instructions or portions of code for implementing the steps of the method according to claims 1 to 15, when said computer program is executed on a programmable device.

19. Message transferred between two network devices of a wireless cellular telecommunication network, for routing an incoming call down to a mobile terminal, **characterised in that** the message comprises at least one information indicating that the message representative of the incoming call has been transferred to at least one second network device and/or authentication parameters of the mobile terminal and/or the subscription parameters of the mobile terminal.
